# EUROPÄISCHE PATENTSCHRIFT

(11) **EP 0 551 592 B1**
(45) Veröffentlichungstag und Bekanntmachung des Hinweises auf die Patenterteilung: **02.10.1996**
(21) Anmeldenummer: 92119668.9
(22) Anmeldetag: 19.11.1992
(51) Int. Cl.: F01L 1/34

(54) **Nockenwellenantrieb einer mehrzylindrigen Brennkraftmaschine**
Camshaft drive for multi-cylinder internal combustion engine
Dispositif d'entraînement d'arbre à cames pour moteur à combustion interne multi-cylindres

(30) Priorität: 11.01.1992 DE 4200509
(43) Veröffentlichungstag der Anmeldung: 21.07.1993
(73) Patentinhaber: Dr.Ing.h.c. F. Porsche Aktiengesellschaft, D-70435 Stuttgart (DE); HYDRAULIK-RING GMBH, D-72622 Nürtingen (DE)
(72) Erfinder: Stephan, Wolfgang, W-7440 Zizishausen 1 (DE); Trzmiel, Alfred, W-7441 Grafenberg (DE); Kröner, Matthias, W-7303 Neuhausen (DE)

(56) Entgegenhaltungen:
- EP-A- 445 356
- EP-A- 0 337 894
- DE-A- 3 421 028
- DE-A- 3 534 446
- DE-A- 3 835 333
- DE-A- 3 921 716
- GB-A- 421 359
- GB-A- 1 024 846
- GB-A- 1 024 846
- MTZ 50(1989) 7/8, S.327-330

## Beschreibung

Die Erfindung betrifft einen Nockenwellenantrieb einer mehrzylindrigen Brennkraftmaschine nach dem Oberbegriff des Anspruchs 1 und des Anspruchs 2.

Ein derartiger Nockenwellenantrieb ist aus GB-A-1 024 846 bekannt. Eine im Gehäuse der Brennkraftmaschine gelagerte Zwischenwelle wird mit einem Kettentrieb von der Kurbelwelle angetrieben. Die Zwischenwelle treibt mit je einer Kette die Einlaßnockenwelle und Auslaßnockenwelle an. Zur Änderung der relativen Drehlage der beiden Nockenwellen zueinander und zur Kurbelwelle wirkt ein hydraulisch betätigter verstellglied gliechzeitig auf die jeweiligen Kette.

Die GB-PS 421 359 behandelt eine Brennkraftmaschine, bei der zwischen einer Kurbelwelle und einer Zwischenwelle ein erster Kettentrieb und zwischen dieser Zwischenwelle und beabstandeten Nockenwellen zwei weitere Kettentriebe vorgesehen sind.

Außerdem ist es bekannt, EP 0 445 356 A1 und DE 34 21 028 A1, in einen Kettentrieb, der zwei Nockenwellen miteinander verbindet, hydraulische Stellglieder zu integrieren, die zwischen Lostrum und Lasttrum der Kette des Kettentriebes wirksam sind, dergestalt, daß sie zur Änderung der Ventilsteuerzeiten das Lasttrum verlängern und das Lostrum verkürzen und vice versa.

Es ist die Aufgabe der Erfindung, einen von der Kurbelwelle einer Brennkraftmaschine ausgehenden Nockenwellenantrieb so zu gestalten, daß die relative Drehlage der Einlaßnockenwelle zur Auslaßnockenwelle und gegenüber der Kurbelwelle einfach und schnell einstellbar ist.

Eine Lösung dieser Aufgabe gelingt mit den kennzeichnenden Merkmalen des Anspruchs 1 und des Anspruchs 2.

Wenn jeder der beiden Nockenwellen ein eigener, von der Zwischenwelle ausgehender Kettentrieb zugeordnet ist, kann bei der Montage die Drehlage jeder Nockenwelle eingestellt werden, ohne daß die Drehlage der anderen Nockenwelle verändert wird.

Weitere die Erfindung ausgestaltende Merkmale enthalten die Ansprüche 3 bis 7.

Ein Ausführungsbeispiel der Erfindung ist in der Zeichnung dargestellt und wird nachfolgend erläutert.

Es zeigen:

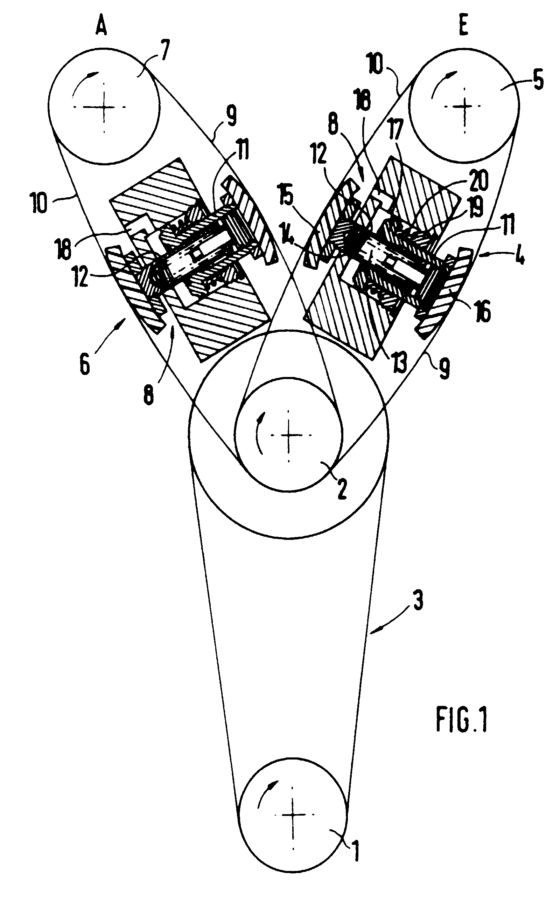

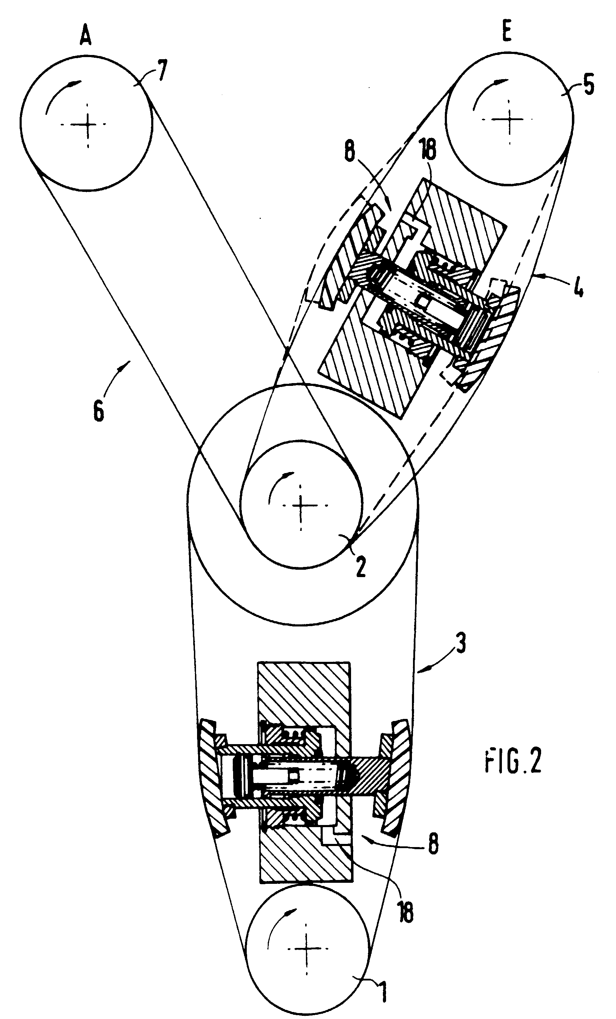

- Fig. 1: Nockenwellenantrieb über eine Zwischenwelle mit Nockenwellenverstellvorrichtung,
- Fig. 2: abgeänderte Ausführung einer Nockenwellenverstellvorrichtung,
- Fig. 3 bis 6: Ventilhubkurven bei unterschiedlichen Bewegungsstellungen der Nockenwellenverstellvorrichtungen.

Von einer Kurbelwelle 1 einer mehrzylindrigen Brennkraftmaschine wird zum Antrieb der Nockenwellen eine Zwischenwelle 2 mit einem Kettentrieb 3 so angetrieben, daß sie mit halber Kurbelwellendrehzahl umläuft. Von der Zwischenwelle 2 geht ein Kettentrieb 4 zu der die Einlaßventile betätigenden Einlaßnockenwelle 5 und ein weiterer, gleichgestalteter Kettentrieb 6 zu der die Auslaßventile betätigenden Auslaßnockenwelle 7.

Um zur Änderung der Ventilsteuerzeiten die relative Drehlagen der Nockenwellen 5 und 7 gegenüber der Zwischenwelle 2 bzw. der Kurbelwelle 1 gesondert voneinander veränderbar zu machen, besitzen beide Kettentriebe 4 und 6 eine hydraulisch betätigte Spann- und Verstellvorrichtung 8. Von der Ketteninnenseite her wirkt sie zugleich auf das Lasttrum 9 und auf das Losttrum 10 der Kettentriebe 4 und 6.

Wie in Fig. 2 verdeutlicht, kann bei Verschieben der Spannvorrichtung 8 quer zur Kette das Lasttrum 9 verlängert und das Lostrum 10 verkürzt oder das Lasttrum 9 verkürzt und das Lostrum 10 verlängert werden und so die Drehlage der Nockenwellen verändert werden. Die Spann- und Verstellvorrichtung 8 besteht aus einem hohlen äußeren Hydraulikkolben 11, einem in ihm längsgeführten ebenfalls hohlen inneren Hydraulikkolben 12 und einer in dem Hohlraum 13 zwischen den Hydraulikkolben 11, 12 verspannten Schrauben-Druckfeder 14, mit der die Kettentriebe unter konstanter Spannung gehalten werden. Hierbei liegt ein am inneren Hydraulikkolben 12 befestigter Spannschuh 15 am Lasttrum 9 der Kettentriebe 4, 6 an. Ein endseitig im äußeren Hydraulikkolben 11 befestigter Spannschuh 16 drückt auf das Lostrum 10 der Kettentriebe 4, 6. Am anderen Ende ist der äußere Hydraulikkolben 11 mit einem Bund 17 versehen, der als Verstellglied zum Querverschieben der Spannvorrichtung 8 ausgebildet ist. Wird über einen Hydraulikanschluß 18 Druck auf die Stirnseite des Bundes 17 gegeben, so verschiebt sich die Spannvorrichtung 8 samt den Kettentrums, wobei eine äußere, sich am Spannergehäuse 19 abstützende Schraubenfeder 20 verspannt wird.

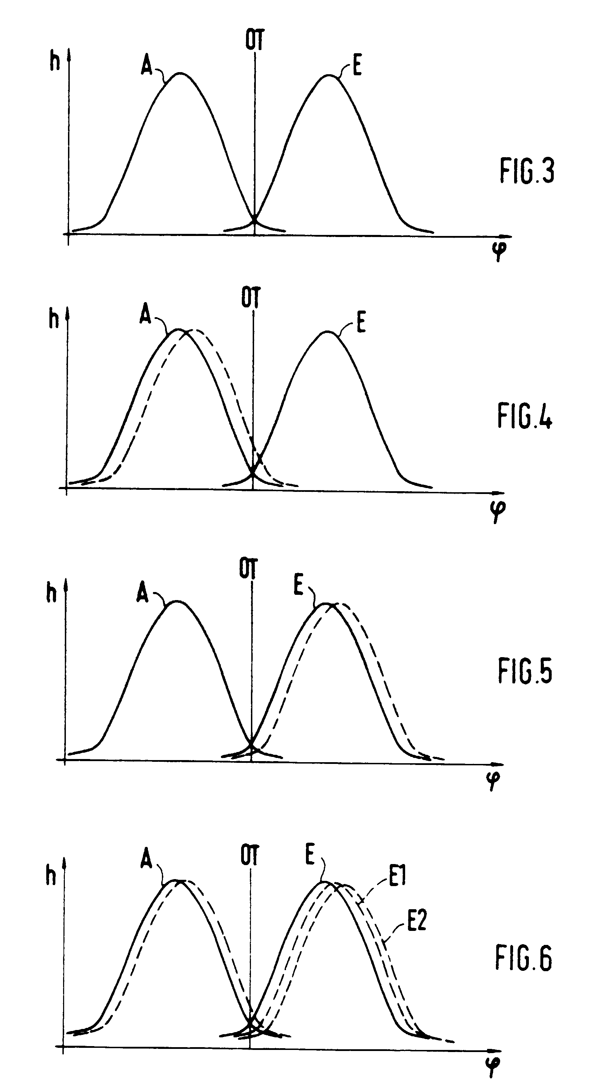

In den Fig. 3 bis 6 sind verschiedene Lageanordnungen der Ventilhubkurven A für das Auslaßventil und E für das Einlaßventil dargestellt, wobei jeweils der Ventilhub H als Funktion des Nockenwellendrehwinkels ϕ gezeichnet ist.

Fig. 3 zeigt die Ausgangslage der Ventilhubkurve, wenn die Spann- und Verstellvorrichtungen 8 unbetätigt sind. Die Ventilhubkurven liegen symmetrisch zum oberen Totpunkt OT des Kolbens und überschneiden sich an dieser Stelle.

In Fig. 4 ist durch Betätigen der Verstellvorrichtung 8 die Ventilhubkurve A um ca. 17° nach rechts verschoben. Die Ventilüberschneidung ist größer als in Fig. 3.

Nach Fig. 5 ist lediglich die Verstellvorrichtung für die Einlaßnockenwelle betätigt. Die Ventilhubkurve des Einlaßventils rückt dabei nach rechts. Die Ventilüberschneidung wird geringer; das Einlaßventil öffnet später. Da es auch später schließt, kann mehr Gemisch in den Zylinder nachströmen. Es wird eine bessere Zylinderfüllung und damit eine höhere Endleistung erzielt.

Die Ventilhubkurven nach Fig. 6 lassen sich mit dem in Fig. 2 dargestellten Nockenwellenantrieb erreichen. Durch Verschieben der am Kettentrieb 3 angeordneten Verstellvorrichtung 8 wird die relative Drehlage der Zwischenwelle zur Kurbelwelle geändert. Die Ventilhubkurve A wird in die gestrichelte Lage, die Ventilhubkurve E in die gestrichelte Lage E1 verschoben. Wird nun zusätzlich auch die Verstellvorrichtung am Kettentrieb 4 verschoben, so nimmt die Ventilhubkurve E die Position E2 ein. Die gesamte Verstellung des Einlaßventils in Richtung spät beträgt dann etwa 26°. Mit einem Nockenwellenantrieb nach Fig. 2 läßt sich sowohl die relative Drehlage der beiden Nockenwellen zueinander als auch gegenüber der Kurbelwelle verändern.

## Patentansprüche

1. Nockenwellenantrieb einer mehrzylindrigen Brennkraftmaschine mit mindestens einem Einlaßventil und einem Auslaßventil pro Zylinder, wobei die Einlaßventile mit einer Einlaßnockenwelle (5) und die Auslaßventile mit einer Auslaßnockenwelle (7) betätigt sind, welche Nockenwellen (5, 7) mit je einem Kettentrieb (4, 6) von einer Zwischenwelle angetrieben sind, die ihrerseits von der Kurbelwelle (1) angetrieben ist, dadurch gekennzeichnet, daß in an sich bekannter Weise auf die Innenseite des Lostrums (10) und des Lasttrums (9) des jeweiligen Kettentriebs (4, 6) eine Spannvorrichtung (8) einwirkt, die zur Änderung der Ventilsteuerzeiten insgesamt mit einem hydraulisch betätigten Verstellglied (17) quer zu den jeweiligen Kettentrieben (4 oder 6) so verschiebbar ist, daß das Lostrum (10) der Kette verlängert und das Lasttrum (9) verkürzt oder das Lasttrum (9) verkürzt und das Lostrum (10) verlängert wird, wobei die Verstellglieder (17) unabhängig voneinander betätigbar sind.

2. Nockenwellenantrieb einer mehrzylindrigen Brennkraftmaschine mit mindestens einem Einlaßventil und einem Außlaßventil pro Zylinder, wobei die Einlaßventile mit einer Einlaßnockenwelle (5) und die Auslaßventile mit einer Auslaßnockenwelle (7) betätigt sind, welche Nockenwellen (5, 7) mit je einem Kettentrieb (4, 6) von einer Zwischenwelle (2) angetrieben sind, die ihrerseits von der Kurbelwelle (1) angetrieben ist, dadurch gekennzeichnet, daß die Zwischenwelle (2) von der Kurbelwelle (1) mit einem Kettentrieb (3) angetrieben ist, an dem eine quer zum Kettentrieb (3) verschiebliche Spannvorrichtung (8) angebracht ist und mit der die relative Drehlage der Zwischenwelle (2) zur Kurbelwelle (1) veränderbar ist.

3. Nockenwellenantrieb nach einem der Ansprüche 1 oder 2, dadurch gekennzeichnet, daß die Zwischenwelle (2) im Gehause der Brennkraftmaschine unterhalb und mittig zwischen der Einlaßnockenwelle (5) und der Auslaßnockenwelle (7) gelagert ist.

4. Nockenwellenantrieb nach Anspruch 1 oder 2, für Brennkraftmaschinen mit zwei Zylinderreihen in V-Bauweise, dadurch gekennzeichnet, daß die Zwischenwelle (2) in V-Mitte angeordnet ist.

5. Nockenwellenantrieb nach Anspruch 1 oder 2, dadurch gekennzeichnet, daß die Einlaßnockenwelle (5) und/oder die Auslaßnockenwelle (7) aus ihrer normalen Drehlage heraus im Zweipunktbetrieb um ca. 17° relativ zur Zwischenwelle (2) verdrehbar ist, so daß das Einlaßventil und/oder das Auslaßventil um einen entsprechenden Betrag später öffnet und schließt.

6. Nockenwellenantrieb nach Anspruch 2, dadurch gekennzeichnet, daß die Zwischenwelle (2) relativ zur Kurbelwelle (1) um ca. 8° bis 10° verdrehbar ist, so daß das Einlaßventil und zugleich das Auslaßventil um einen entsprechenden Betrag später öffnet bzw. schließt.

7. Nockenwellenantrieb nach Anspruch 1 oder 2, dadurch gekennzeichnet, daß das Verstellglied (17) hydraulisch betätigt und durch Drehzahl- und/oder Lastsensoren der Brennkraftmaschine gesteuert ist.

## Claims

1. A camshaft drive of a multiple-cylinder internal-combustion engine with at least one intake valve and one exhaust valve *per* cylinder, wherein the intake valves are actuated by an intake camshaft (5) and the exhaust valves by an exhaust camshaft (7), the camshafts (5, 7) being driven by an intermediate shaft with a respective chain drive (4, 6), the intermediate shaft being driven in turn by the crankshaft (1), **characterized in that** a tensioning device (8) acts upon the inside of the slack run (10) and the loaded run (9) of the respective chain drive (4, 6) in a manner known *per se,* the tensioning device (8) being displaceable in such a way together with an hydraulically actuated adjusting member (17) transversely to the respective chain drives (4 or 6) in order to alter the valve-control times, that the slack run (10) of the chain is lengthened and the loaded run (9) is shortened, or the loaded run (9) is shortened and the slack run (10) is lengthened, wherein the adjusting members (17) are actuable independently of one another.

2. A camshaft drive of a multiple-cylinder internal-combustion engine with at least one intake valve and one exhaust valve *per* cylinder, wherein the intake valves are actuated by an intake camshaft (5) and the exhaust valves by an exhaust camshaft (7), the camshafts (5, 7) being driven by an intermediate shaft (2) with a respective chain drive (4, 6), the intermediate shaft (2) being driven in turn by the crankshaft (1), **characterized in that** the intermediate shaft (2) is driven by the crankshaft (1) with a chain drive (3) on which a tensioning device (8) displaceable transversely to the chain drive (3) is mounted and by which the rotational position of the intermediate shaft (2) relative to the crankshaft (1) can be altered.

3. A camshaft drive according to one of Claims 1 or 2, **characterized in that** the intermediate shaft (2) is mounted in the housing of the internal-combustion engine below and centrally between the intake camshaft (5) and the exhaust camshaft (7).

4. A camshaft drive according to Claim 1 or 2, for internal-combustion engines with two rows of cylinders in a V-arrangement, **characterized in that** the intermediate shaft (2) is arranged in the middle of the V.

5. A camshaft drive according to Claim 1 or 2, **characterized in that** the intake camshaft (5) and/or the exhaust camshaft (7) is rotatable out of its normal rotational position in an on-off operation by substantially 17° relative to the intermediate shaft (2), so that the intake valve and/or the exhaust valve subsequently opens and closes by a corresponding amount.

6. A camshaft drive according to Claim 2, **characterized in that** the intermediate shaft (2) is rotatable relative to the crankshaft (1) by substantially 8° to 10°, so that the intake valve and at the same time the exhaust valve subsequently opens and closes by a corresponding amount.

7. A camshaft drive according to Claim 1 or 2, **characterized in that** the adjusting member (17) is actuated hydraulically and is controlled by rotational-speed and/or load sensors of the internal-combustion engine.

## Revendications

1. Dispositif d'entraînement d'arbre à cames pour moteur à combustion interne multi-cylindres, comportant au moins une soupape d'admission et une soupape d'échappement par cylindre, les soupapes d'admission étant actionnées à l'aide d'un arbre à came d'admission (5) et les soupapes d'échappemant étant actionnées à l'aide d'un arbre à came d'échappement (7), lesdits arbres à cames (5, 7) étant chacun entraînés par une transmission à chaîne (4, 6), faisant appel à un arbre intermédiaire, entraîné de son côté par le vilebrequin (1), caractérisé en ce que, de manière connue en soi, sur la face interne du brin lâche (10) et du brin sous charge (9) de la transmission à chaîne (4, 6) respective agit un dispositif tendeur (8), qui peut être déplacé, en vue de modifier les calages des soupapes globalement, à l'aide d'un organe de réglage (17) à actionnement hydraulique, transversalement par rapport aux transmissions à chaîne (4 ou 6) respectives, de manière que le brin lâche (10) de la chaîne soit allongé et que le brin sous charge (9) soit raccourci, ou que le brin sous charge (9) soit raccourci et que le brin lâche (10) soit allongé, les organes de réglage (17) étant actionnables indépendamment les uns des autres.

2. Dispositif d'entraînement d'arbre à cames pour moteur à combustion interne multi-cylindres, comportant au moins une soupape d'admission et une soupape d'échappement par cylindre, les soupapes d'admission étant actionnées à l'aide d'un arbre à came d'admission (5) et les soupapes d'échappement étant actionnées à l'aide d'un arbre à came d'échappement (7), lesdits arbres à cames (5, 7) étant chacun entraînés par une transmission à chaîne (4, 6), faisant appel à un arbre intermédiaire, entraîné de son côté par le vilebrequin (1), caractérisé en ce que l'arbre intermédiaire (2) est entraîné par le vilebrequin (1), à l'aide d'une transtmission à chaîne (3), sur laquelle est monté un dispositif tendeur (8) déplaçable transversalement par rapport à la transmission à chaîne (3) et à l'aide duquel la position en rotation relative de l'arbre intermédiaire (2) par rapport au vilebrequin (1) est modifiable.

3. Dispositif d'entraînement d'arbre à cames selon l'une des revendications 1 ou 2, caractérisé en ce que l'arbre intermédiaire (2) est monté à rotation dans le carter du moteur à combustion interne, au-dessous à au centre, entre l'arbre à cames d'admission (5) et l'arbre à cames d'échappement (7).

4. Dispositif d'entraînement d'arbre à cames selon la revendication 1 ou 2, pour des moteurs à combustion interne comportant deux rangées de cylindres en V, caractérisé en ce que l'arbre intermédiaire (2) est disposé au centre du V.

5. Dispositif d'entraînement d'arbre à cames selon les revendications 1 à 3, caractérisé en ce que l'arbre à cames d'admission (5) et/ou l'arbre à cames d'échappement (7), sont susceptibles de tourner par rapport à leur position en rotation normale, dans un fonctionnement à deux points, cette rotation relative par rapport à l'arbre intermédiaire étant d'environ 17°, de manière que la soupape d'admission et/ou la soupape d'échappement s'ouvrent et se ferment ultérieurement, selon un retard correspondant.

6. Dispositif d'entraînement d'arbre à cames selon la revendication 2, caractérisé en ce que l'arbre intermédiaire (2) est susceptible de tourner d'environ 8° à 10° par rapport à l'arbre de vilebrequin (1), de manière que la soupape d'admission et simultanément la soupape d'échappement s'ouvre ou se ferme ultérieurement, selon un retard correspondant.

7. Dispositif d'entraînement d'arbre à cames selon la revendication 1 ou 2, caractérisé en ce que l'organe de réglage (17) est actionné hydrauliquement et est commandé au moyen de capteurs de vitesse de rotation et/ou de charge du moteur à combustion interne.
